Europäisches Patentamt

**(19)** European Patent Office

Office européen des brevets

**(11)** Publication number:  **0 060 157**

**A2**

**(12)** EUROPEAN PATENT APPLICATION

**(21)** Application number: 82400235.6

**(22)** Date of filing: 10.02.82

**(51)** Int. Cl.³: **B 01 D 13/00**
**B 29 D 3/02**

**(30)** Priority: 25.02.81 US 238124

**(43)** Date of publication of application:
15.09.82 Bulletin 82/37

**(84)** Designated Contracting States:
AT BE CH DE FR GB IT LI LU NL SE

**(71)** Applicant: ALBANY INTERNATIONAL CORP.
1 Sage Road
Menands New York 12201(US)

**(72)** Inventor: Coplan, J. Myron
47 Speen Street
Natick, Mass. 01760(US)

**(72)** Inventor: Bilewski, Friedhelm
13 Oak Street
Medway, Mass. 02050(US)

**(74)** Representative: Moncheny, Michel et al,
c/o Cabinet Lavoix 2 Place d'Estienne d'Orves
F-75441 Paris Cedex 09(FR)

**(54)** High pressure shell.

**(57)** A rigidized filament reinforced impervious cylindrical pressure vessel, having filaments in or adjacent the wall of said vessel and lying parallel to its longitudinal axis which filaments wrappingly engage rigid rings (42, 44) positioned at one or both ends of said hollow cylinder.

FIG.2

EP 0 060 157 A2

- 1 -

DESCRIPTION

T I T L E :

" HIGH PRESSURE SHELL ".

BACKGROUND OF THE INVENTION

The use of membranes to effect separation of gas/gas, liquid/liquid, and liquid/solid mixtures and solutions has achieved general industrial applicability by various methods, among them being ultrafiltration, hyperfiltration, reverse osmosis, dialysis. In general, membrane elements associated with these processes are contained in vessels, comprising a container having various inlet and outlet ports and an assembly of membranes within said container, the entire assembly being referred to as a module. The internal configurations are so arranged as to permit the introduction of a feed stream with or without pressure on the upstream face of the membranes, means for collecting permeate which passes through the membranes and emerges on their downstream faces, and means for keeping feed and permeate materials from commingling.

In the field of reverse osmosis therefore and in other related high-pressure fluid dynamic operations, there is the need for low cost, high strength shells capable of sustaining internal operating pressures in the range of several hundred to a thousand or more psi. These shells are often 2", 4", 8", or

- 2 -

even larger in diameter and may run in length from a foot or two up to twenty feet or more. In the reverse osmosis situation, they are the housing in which the membrane separatory elements are contained.

Initially, shells of the latter sort were fabricated of bulk metal. More recently these shells have been fabricated of fiberglass reinforced plastic, generally epoxy resin. For the most part, such shells have been fabricated by conventional filament winding, although ordinary biaxial braiding has been utilized for the fabrication of the fibrous reinforcement of the shell.

A difficulty with these configurations has been the methods of end closure, sealing, and making connections for pipe fittings. Various configurations have been utilized involving grooves machined into either the internal surface or the external surface of the shell, which afford anchorage sites on the shell for snap rings and the like. Alternatively, sleeves which fit snugly over the outside diameter of the shell have been bonded to their external surfaces with glue in the fashion of a coupling in order to provide a means for end connection. In another alternative, overlap layers of fiberglass windings are applied near the ends of the pressure tubes in order to make a thickness capable of being drilled for bolts, or, in other configurations, bolts or studs have been trapped into

- 3 -

extra thick ends during filament winding.

The pressure shell must not only absorb the internal hydraulic forces in the radial direction, but, if longitudinal tie rods are to be avoided, it must also accept axial stresses imposed on the shell. In the conventional designs this leads to two inherent deficiencies. One has to do with the fact that the filament-wound fibers lie at a helix angle to the axial direction of stress, and unless the helix is rather steep, an excessive amount of winding is required to develop a significant axial component capable of taking up the longitudinal stress in the shell.

Further considerations relate to the problems of end closure and end connections. Each of the alternative methods for creating a closure connection referred to above in the conventional systems relies upon the shear strength of the epoxy matrix primarily if not entirely. In some instances this calls for an excessive amount of shell overhang in the case where machined grooves are used for snap rings. In other cases, serious failures have occurred when the glue line between a bonded coupling and the shell has weakened.

SUMMARY OF THE INVENTION

The invention to be more fully described is a generally cylindrical pressure-resistant impervious shell comprising a polymeric matrix reinforced by at least two distinguishable systems of filaments, one

- 4 -

said system having filament axes lying substantially parallel to the longitudinal axis of the cylinder. At least these filaments follow a path which reverses direction at one or both ends of the cylinder in such a way as to engage a ring-link retaining member at one or each end of the cylinder. In a preferred embodiment the pressure shell comprises an impervious polymeric inner liner over which is assembled a composite of polymeric resin reinforced by a triaxial braid having yarns lying both in left and right hand helices and in a path parallel to the axis of the cylinder. The triaxial braid is applied so that it forms a number of layers and entraps a ring between a pair of braid layers at one end and between a pair of layers at the other, at least one layer being common to each such pair.

In other embodiments of our invention the inner impervious liner may be eliminated and the resin comprising the composite molded with the filaments so densely as to be impervious to high pressure fluids.

In still another embodiment, the braid may be of simple double-helical style with non-braided yarns laid in to provide the longitudinal filaments parallel to the cylinder axis. At least the laid-in axially parallel yarns make path reversals at each end of the cylinder and engage retaining rings thereby.

In still another embodiment the filaments may be part of tubular woven fabric, where again one

- 5 -

set of yarns lies parallel to the cylinder axis and by reversing direction at each end engages retaining rings by entrapping them between layers of the tubular fabric.

The principles of these embodiments are illustrated by the drawings.

DESCRIPTION OF THE DRAWINGS

Fig. 1 is a schematic longitudinal cross-section drawing of a prior art shell;

Fig. 2 is a schematic longitudinal cross-section drawing of the outer reinforcement structure of a shell constructed in accordance with the subject invention;

Fig. 3 is a perspective view of a shell constructed in accordance with the subject invention;

Fig. 4 is a longitudinal sectional view taken along the line 4-4 in the direction of the arrows in Fig. 3, and

Fig. 5 is a segmentary view of the triaxial braiding used in the construction of the reinforcement structure of the shell shown in Fig. 3.

DESCRIPTION OF THE PREFERRED EMBODIMENT :

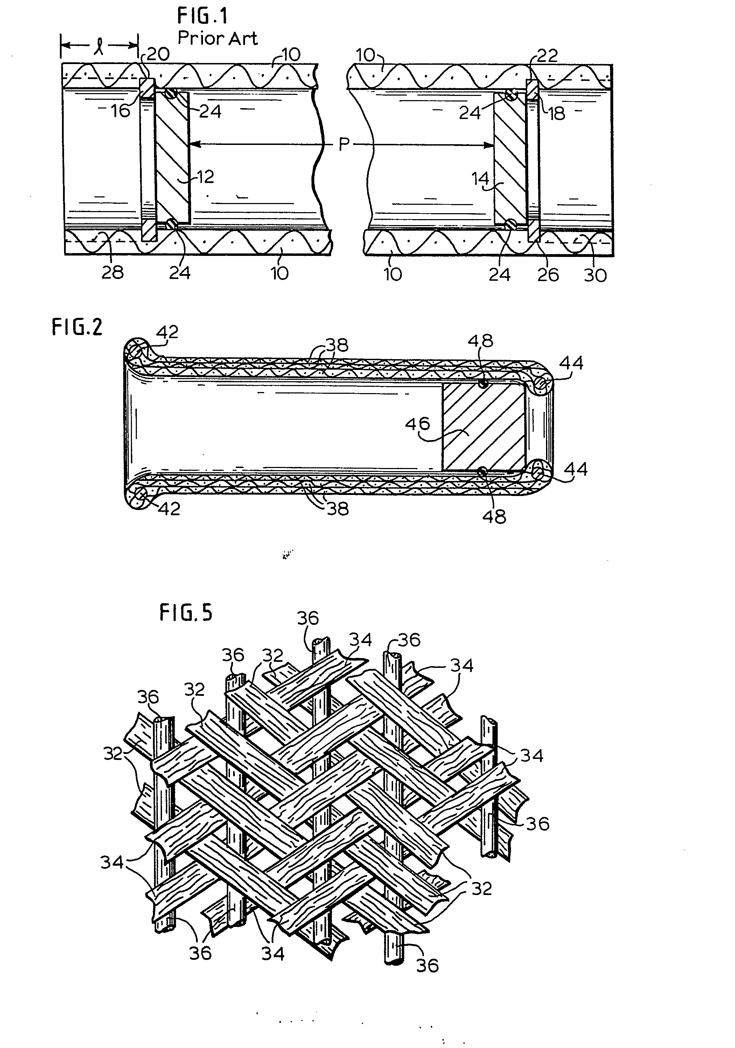

In Fig. 1 a prior art shell for use in high pressure fluid operations is shown in schematic cross-section form in order to illustrate difficulties of end closure and end connection found to exist in the prior art. The shell of Fig. 1 includes a cylindrical outer wall 10 which can be fabricated of filament

- 6 -

wound fiberglass reinforced epoxy material, end plates 12 and 14 maintained in position against the internal pressure "P" by snap rings 16 and 18 which are set in respective cylindrical grooves 20 and 22 formed in the inside surface of wall 10. "O"-rings 24 and 26 are shown as typical sealing means.

Broken lines 28 and 30 illustrate the locus of shear failure to which the shell is susceptible. In the absence of bulk strength in the wall, which is costly and inconvenient, some means is required to anchor the end plugs in the presence of longitudinally directed pressure forces which does not rely upon the shell wall material to resist shear.

Fig. 2 illustrates how the present invention solves this problem. What is illustrated by this diagrammatic cross-section is the organization of layers of fabric having longitudinal filaments making path reversals around entrapped rings at each end. In this illustration one such ring has a diameter larger than that of the shell, and the other is smaller. The reinforcement fabric is described consisting of triaxial braid, but it should be understood that other yarn assemblies may be employed as described above, provided one system of yarns lies parallel to the cylinder axis and makes reversals around entrapped retaining rings. The triaxial braid is, however, our preferred embodiment since it lends itself to facile fabrication steps.

- 7 -

Triaxial braiding is known and the term triaxial as used herein contemplates two sets of yarns lying in helical paths in the sense of a conventional braid, with a third set of yarns lying entirely parallel to the longitudinal direction of the shell. This assemblage of three yarn systems can be achieved on an essentially conventional braider having the faculty for feeding a third set of yarns which are not caused to intertwine by carriers, but rather feed continuously in the longitudinal direction. Such a configuration is illustrated in Fig. 5 wherein yarns indicated by the numerals 32 and 34 are the respective sets of yarns referred to above as lying in helical paths and the numeral 36 indicates the third yarn system intended to lie parallel to the longitudinal axis of the shell.

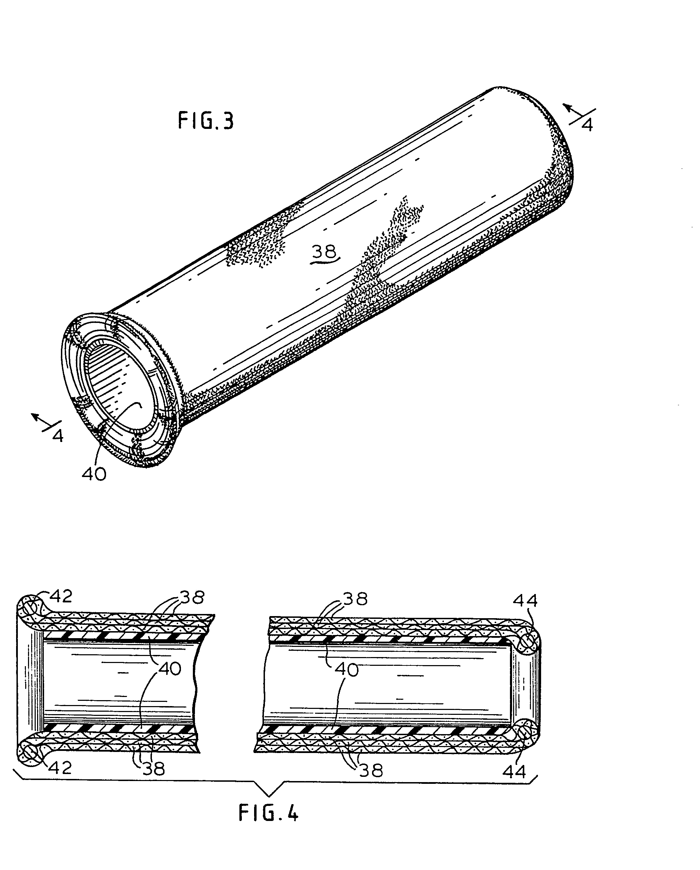

In Figs. 3 and 4 a shell constructed in accordance with this invention is illustrated. The outer structure 38 (or outside shell) is formed of plastic matrix reinforced by triaxial braiding and the inner liner 40 is shown for purposes of example only. The inner liner can be fabricated of suitable non-reactive materials and it is conceivable that in certain applications the inner shell would not be present but rather the reinforced braiding may be made impervious by suitable impregnation.

The braiding to provide the outside shell 38 may be carried out over a mandrel (not shown) having

- 8 -

a single selected diameter or different diameters for different regions of the tube length, or alternatively it may be carried out directly onto the inner liner 40. The liner itself may be uniform in inside diameter over its length or have selectively varied inside diameters (and possibly resulting varied outside diameters) over its length, depending upon the specific design.

The invention lends itself to making end closures by braiding the yarn systems 32, 34 and 36 to create the outer structure 38, over rings 42 and 44 as is shown schematically in Fig. 2, or by making other controlled changes in the radial dimension at specified intervals.

In Fig. 2 an end plug 46 with O-ring 48 is shown in position.

The important aspect of this invention for the fabrication of end closures is the utilization of filaments lying parallel to the cylinder axis such as can be achieved in a triaxial braid so that the longitudinal stress in the shell is taken primarily in the longitudinally oriented yarns. Accordingly, the invention readily lends itself to the provision in such a shell of properly connected end plates or other end fixtures by clamps or in other attachment ways so that the loadings are transmitted directly to the yarns under tension without relying upon shear strength characteristics of composite epoxy or other resin. With the present invention, it is possible to provide shells with lightly bonded braided jackets over impervious inner liners and thereby achieve systems which will be leakproof and have the necessary tensile requirements to take up hoop stresses, longitudinal stresses, and meet end closure requirements.

- 10 -

- C L A I M S -

1. A shell for use in high pressure applications including an inner liner, and end plugs, which comprises at least two systems (36 - 32,34) of filaments with a first system (36) parallel to the longitudinal axis of the liner and means (44,42) for retaining said end plugs (46) by operatively engaging said first system whereby internal longitudinal pressure forces on said plugs are substantially resisted by said first filament system which is parallel to the longitudinal axis of said liner.

2. A shell in accordance with claim 1 in which said second system comprises a first and second helical filament systems (32,34) lying in helical paths on the surface of said shell.

3. A shell for use in high pressure applications including an elongated braided structure and end plugs attached thereto to define a casing, said braided structure (38) being supplemented by another filament system (36) extending between said end plugs (46) and means (44,42) for retaining said end plugs by operatively engaging said supplemental system whereby internal forces impinging upon said end plugs are substantially resisted by said supplemental system.

4. A shell in accordance with claim 3 in which said braided structure (38) is a triaxial braiding in which second and third filament systems (32,34) are present and each of which is angularly disposed to said first filament system (36).

5. A shell in accordance with claim 1 in which the two filament systems (32,34) comprise a woven fabric.

6. A shell in accordance with claim 2 wherein the filament systems provide a braid which makes reversals at each end of the cylinder and entraps rings (42,44) between braid layers at the reversals.

FIG.1
Prior Art

FIG.2

FIG.5

FIG.3

FIG.4